# EUROPEAN PATENT APPLICATION

(11) **EP 1 955 986 A1**
(43) Date of publication of application: **13.08.2008**
(21) Application number: 07100735.5
(22) Date of filing: 18.01.2007
(51) Int. Cl.: C04B 18/02, C04B 38/00

(54) **Light weight aggregate**

(71) Applicant: Sika Technology AG, 6340 Baar (CH)
(72) Inventor: Hesselbarth, Daniela, 8482, Sennhof (CH); Danzinger, Michael, 8064, Zürich (CH); Blank, Norman, 8803, Rüschlikon (CH); Schiegg, André, 8912, Obfelden (CH)
(74) Representative: Sika Patent Attorneys

(57) **Abstract**

A light weight aggregate comprises mineral filler in the range of 5 - 95 % and silicate in the range of 95 to 5%. Such light weight aggregates can be used to create light weight articles as for example high strength light weight concrete.

## Description

### TECHNICAL FIELD

The invention relates to light weight aggregate in accordance with the preamble of the first claim.
The invention also relates to a light weight article and a process to produce a light weight aggregate.

### BACKGROUND OF THE INVENTION

Light weight aggregates, in the following also called bubbles or granules, are known from EP 1 047 643 which discloses the production of bubbles from waste silicate powder and using such bubbles in concrete.

Light weight concretes are specified by their unit weight and compressive strength. Both of these parameters are essential. High strength light weight concrete is specified as concrete with compressive strength values higher than 55/60 MPa. The mechanical properties of such concretes are determined by the strength of the hardened cement/binder matrix as well as the mechanical properties of the light weight aggregates. These two parameters allow achieving specified strength - unit weight values by selecting the proper concrete mix design and type of light weight aggregate. Light weight aggregate with mechanical properties to produce light weight concrete with a unit weight of 1.800 kg/m³ and a compressive strength of 100 MPa were developed.

Currently available granules as disclosed in the above EP 1 047 643 are based on expanded glass coated with different ceramic materials to improve the strength of the bubbles and to prevent water from the cement paste to infiltrate the matrix. This would result in an increase of the unit weight and in difficulties to produce the required strength unit weight values.
Such bubbles are difficult to produce and reproduce and need a coating to have good properties. As the coating has a higher density than the bubble itself, the coating thickness is an important parameter and the coating thickness should be not too thick. Especially with small granules it is difficult to get good results. The size of the air bubbles in the granules is also quite big and also there are cracks in the surface of the bubbles.

### SUMMARY OF THE INVENTION

Accordingly, one object of the invention is to provide better light weight aggregates than known in the art.

According to the invention, this is achieved by the features of the first claim.

The advantages of the invention can be seen, inter alia, in the fact that the inventive light weight aggregates are much easier to produce and that the properties are much easier to adjust. The inventive light weight aggregates also do not need to be coated to get good properties in a matrix like cement. The inventive light weight aggregates have a very good adherence to concrete because of their specific surface containing mineral filler. The process provides the production of light weight aggregates which have closed pores, more homogenous particle size than that produced by the known processes, and improved strength properties.

Further advantageous embodiments of the invention emerge from the sub claims.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawing, wherein:
- Fig. 1: a light weight aggregate according to the prior art;
- Fig. 2: a light weight aggregate according to the invention.

### DESCRIPTION OF THE PREFERRED EMBODIMENTS

The present invention covers light weight bubbles based on silicates, preferably glass and mineral filler, preferably mineral filler of natural origin.

Such a mineral filler of natural origin is diatomite, also known as kieselguhr, preferably calcinated diatomite which has a higher content of crystalline phase, preferably a content of crystalline phase of 5 - 70 %, more preferably in the range of 50 - 70 %. Diatomite is a powdery, non-metallic mineral composed of the fossilized skeletal remains of microscopic single-celled aquatic plants called diatoms. Over 10,000 species of these microscopic algae have been recognized, each with its own distinct shape, ranging in size from under 5 microns to over 100 microns. Diatomite deposits are usually categorized based upon their fresh water or salt water origin. Both the chemical composition and the physical structure of diatomite make it of great commercial value for a wide spectrum of uses, including filter aids, functional fillers, carriers for active ingredients and diluents, and aggregates.

In general bubbles are produced by mixing crushed glass with mineral filler and blowing agent, afterwards sintering at temperatures of 600 - 1000°C, preferably 600 - 800 °C.
The mineral filler content should be in the range of 5 - 95 %, where about at least 5 % of glass is necessary to hold the bubbles together.

As suitable silicates, waste glass powder, ground enamel frit, waste moulding sand, waste ceramic, silicate waste from the manufacture of electric bulb or fluorescent lamp or other organic or inorganic silicate waste are used, but original glass powder or ground silicate can also be applied.

### Example 1

50 parts by weight of diatomite, and 50 parts by weight of glass waste powder of 8000 cm/g specific surface was mixed with montmorillonite pre-treated with sodium hydroxide solution and to the mixture 5 parts by weight of ground dolomite having a particle size of 50-70 µm were added.

The mixture was then homogenized by grinding the components together in a ball mill.

The pre-treatment of the montmorillonite was carried out by grinding together 2 parts by weight of sodium hydroxide, 18 parts by weight of water and 8 parts by weight of montmorillonite in a ball mill.

In a desintegrator to the homogenized mixture containing the glass waste 2 parts by weight of alkali hydrogen phosphate, 18 parts by weight of water and 0.2 parts by weight of a mixture of rare earth metal oxides (consisting of lanthanum, cerium and europium oxides) were added.

The wet mixture was granulated and pre-dried at 120°C.

In a desintegrator the granules were mixed with 4 parts by weight of calcium aluminum silicate.

The coated granules were heated for 3 minutes at 700 to 750°C in a furnace, then allowed to cool at ambient temperature.

The invention is of course not restricted to the exemplary embodiment shown and described.

Obviously, numerous modifications and variations of the present invention are possible in light of the above teachings. It is therefore to be understood that within the scope of the appended claims, the invention may be practiced otherwise than as specifically described herein.

The general process may be characterized in that to 5% to 95%, preferably 60 to 75%, of mineral filler, 95% to 5 % silicate powder, preferably waste glass powder, waste enamel frit, waste molding sand, waste ceramic, organic or inorganic silicate waste or a mixture thereof having a specific surface of 2'000-10'000 m2/g, preferably 8'000-10'000 m2/g, is added. Additionally 1-20 parts by weight of gas forming material of particle size 5-100 µm, preferably 5-20 µm, preferably ground limestone and/or dolomite and/or magnesite and/or witherite and/or calcium carbonate and/or sugar and/or potassium and/or magnesium carbonate is added. The mixture is then heat treated to receive the light weight aggregate.

Optionally a pelletration agent can be added. Such a pelletration agent may be montmorillonite optionally activated with a 1-10% by weight solution of alkali metal hydroxide or metal carbonate, and/or serpentine and/or alumina and/or aluminum oxide hydroxide. In general the inventive light weight aggregates, bubbles can be produced in spherical shape by a pelletration process with diameters ranging from 0.1 - 8 mm.

Optionally a flux agent can be added which reduces the melting point of glass and gives the possibility to better control the bubbles size in the granules. In general phosphate or alkaline compounds could be used. Also rare earth metal oxide or the mixture of such oxides can be used, which help to adjust the optimal surface tension of the mixture and to induce a quick crystallization process in the material. This way the strength of the granules formed is surprisingly increased.

The granules also can be coated with an organic or an inorganic compound or a mixture. Examples of inorganic coatings are mineral fillers such as diatomite, ceramics, cement, etc or a mixture thereof. Examples of organic coatings are hydrophobic agents, adhesive agents, polymers, etc or a mixture thereof. Obviously also a mixture of inorganic and organic coatings could be used. The inorganic coating is preferably applied before the blowing process of the bubble, the organic coating after the blowing process.

Surface properties like adhesion with cement paste, water adsorption are important. In general the surface roughness is a critical parameter for compressive strength. The water adsorption behavior of the bubbles is even above > 65 % of mineral filler content still less than 3 %, therefore there is no influence on workability and water cement W/C ratio. This is important for applications like pumping of the light weight concrete. A small adsorption rate and dense surface is necessary to maintain the unit weight.
By using a mineral filler such as diatomite the surface of the granules is impermeable and watertight without adding any additional coating. As the granules are impermeable, when using them in cement or like materials, adsorption of water from the cement paste during concrete, transport in an agitator and application of the concrete (pumping) mixing is minimized.

If a coating has to be applied optionally, process parameters control thickness and uniformity of the coating, the thickness of the coating is reflected on the weight of the bubbles.

When the granules are mixed with binding material, shaped articles can be manufactured from the mixture. As binding material cement, gypsum, bitumen, thermoplastic polymers or thermosetting synthetic resins can be applied.

For the concrete mix design based on the inventive bubbles structural elements with compressive strength values in the range of 15 - 110 MPa and unit weight as low as 0.9 ("floating concrete") with a compressive strength of > 25 MPA may be achieved.

For all types of workability requirements it is possible to have:
- concrete mix designs for slump in the range of 8 - 22 cm
- concrete with the inventive bubbles to be produced as self compacting concrete SCC
- concrete mix designs to produce pre - stressed concrete
- currently used ready made concrete RMC, precast plants able to produce light weight concrete based on inventive bubbles with existing production equipment and processes
- concrete with the invented bubbles: tensile strength without addition of fibers > 17 MPa
- addition of plastic fibers (PP, PVA) improve tensile strength, ratio length: diameter determine influence on workability (= slump, cohesion)
- improvement of fire resistance by the addition of polypropylene PP fibers, minimum amount of fibers necessary 1 kg / m3 concrete

The bubbles produced according to the inventive process allow coating of the surface with auxiliary chemical admixtures to improve concrete properties before, during and after hardening, slump life, concrete softness, setting times, strength development, autogeneous shrinkage, surface aspect, air content, etc. Concretes / mortars based on the bubbles can be sprayed by dry- and wet processes.

The inventive bubbles used in concrete / mortars / grouts allow better thermal isolating properties and improve thermal behavior especially fire resistance, reduce sound transmissions and therefore give a noise reduction and better acoustic behavior, can be used as light weight materials as temporary filling material: low strength, unit weight < 0.7 kg/m³

### Example 2: Expanded glass with 50 vol. % mineral filler with ceramic coating

The light weight aggregate (LWA) received from example 1 was used with a binder of cement. Different LWA with different size distribution where used.

**Table 1**

| | | | |
|---|---|---|---|
| Cement | 28.5 | all weight-% | |
| Silica fume | 5.7 | | |
| Filler | 12.7 | | |
| Sand 0.06-0.25 | 14.4 | Sand: crushed light weight aggregate | |
| Sand 0.3-0.8 | 10.8 | | |
| LWA 1: 0.5 - 1 | 2.9 | Size distribution in mm | |
| LWA 2: 1 - 2 | 10.2 | | |
| LWA 3: 2 - 4 | 15.3 | | |
| Water | 8.7 | | |
| W/C | 0.26 | | |
| Viscocrete | 0.9 | | |
| | | | |
| Compressive Strength | 95 N/mm2 after 28 days | | |
| Unit weight | 1800 kg / m3 | | |

To measure the compressive strength a prism with 4x4x16 cm was used.

### Example 3: Expanded glass with 50 vol. % mineral filler without coating

Compressive strength: 80 MPa
Unit weight: 1800 kg/m³

### Example 4: Expanded glass with 75 vol. % mineral filler without coating

Compressive strength: 85 MPa
Unit weight: 1800 kg/m³

### Example 5: 95 vol. % mineral filler with 5 vol. % glass, no coating

Compressive strength: 65 MPa
Unit weight: 1750 kg/m³

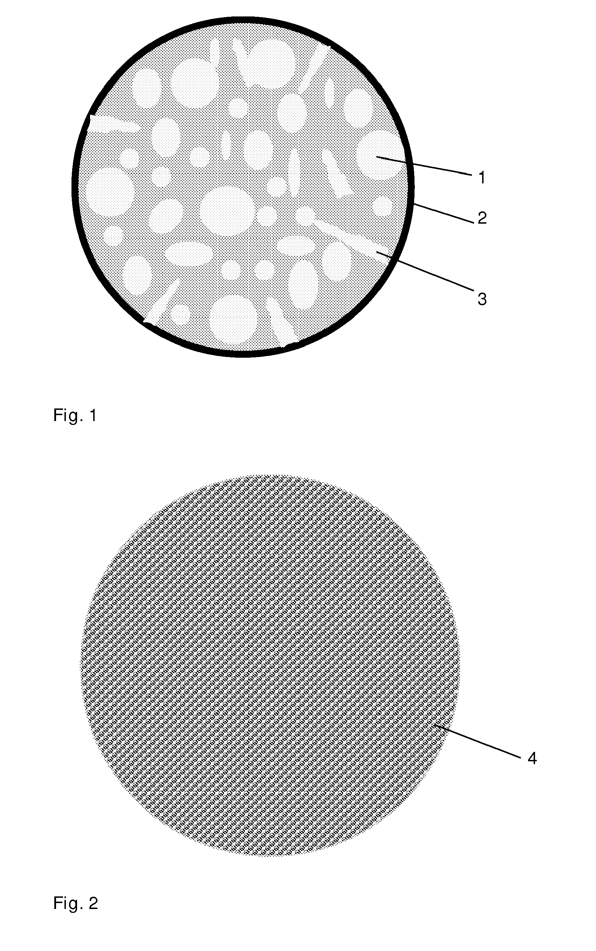

Fig. 1 shows a light weight aggregate according to the prior art. The known granules have big air entrained bubbles 1 and cracks 3 on the surface. To give good properties, they need a coating 3 on the surface.

In Fig. 2 an inventive light weight aggregate is shown, which has much smaller air entrained bubbles 4 compared to the Fig. 1. Such light weight aggregate therefore have the advantages named above. An additional coating is not needed to have good properties.

## Claims

1. Light weight aggregate,
comprising
mineral filler in the range of 5 - 95 % and silicate in the range of 95 to 5%.

2. Light weight aggregate as claimed in claim 1,
wherein mineral filler is in the range of 60 - 75 %.

3. Light weight aggregate as claimed in claim 1 or 2,
wherein the mineral filler is of natural origin such as diatomite or kieselguhr.

4. Light weight aggregate as claimed in claim 3,
wherein the diatomite is calcinated and has a content of crystalline phase of 5 - 70 %, more preferably in the range of 50 - 70 %.

5. Light weight aggregate as claimed in one of the preceding claims,
wherein the silicate has a specific surface of 2'000-10'000 m2/g, preferably 8'000-10'000 m2/g

6. Light weight aggregate as claimed in claim 5,
wherein the silicate is glass, preferably waste glass powder, waste enamel frit, waste molding sand, waste ceramic, organic or inorganic silicate waste or a mixture thereof.

7. Light weight aggregate as claimed in one of the preceding claims,
wherein a pelletration agent and/or a flux agent is added.

8. Light weight aggregate as claimed in one of the preceding claims,
wherein a coating is added, the coating is organic and/or inorganic.

9. Light weight aggregate as claimed in claim 8,
wherein the inorganic coating is a mineral filler such as diatomite and/or ceramics and/or cement.

10. Light weight aggregate as claimed in claim 8,
wherein the organic coating is a hydrophobic agent and/or adhesive agent and/or a polymer.

11. Light weight article with a light weight aggregate as claimed in one of the preceding claims.

12. Light weight article as claimed in claim 11,
wherein the matrix of the light weight article comprises cement.

13. Process to produce a light weight aggregate,
comprising the steps of
mixing mineral filler in the range of 5 - 95 % and silicate in the range of 95 to 5% with a gas forming material,
and heat treat the mixture.

14. Process as claimed in claim 13,
wherein the gas forming material is added in the amount of 1-20 parts by weight and of particle size 5-100 µm, preferably 5-20 µm.
